# EUROPÄISCHE PATENTANMELDUNG

(11) **EP 1 249 324 A2**
(43) Veröffentlichungstag der Anmeldung: **16.10.2002**
(21) Anmeldenummer: 02007771.5
(22) Anmeldetag: 06.04.2002
(51) Int. Cl.: B28B 3/22, B28B 13/02

(54) **Strangpresse für plastische Massen, insbesondere für keramische Massen**

(30) Priorität: 10.04.2001 DE 10118953
(71) Anmelder: HÄNDLE GMBH, D-75417 Mühlacker (DE)
(72) Erfinder: Händle, Frank, 75417 Mühlacker (DE)
(74) Vertreter: Twelmeier, Ulrich, Dipl. Phys.

(57) **Zusammenfassung**

Beschrieben wird eine Strangpresse für plastische Massen, insbesondere für keramische Massen,
- mit einem Gehäuse (1)
- mit einer drehbar in dem Gehäuse (1) gelagerten Schnecke (2) oder mit mehreren parallel nebeneinander drehbar in dem Gehäuse gelagerten Schnecken,
- mit einer an der Oberseite des Gehäuses (1) angeordneten Beschickungsöffnung (7), durch welche hindurch die sich drehende(n) Schnecke(n) (2) die plastische Masse in das Gehäuse (1) einzieht bzw. einziehen,
- und mit einer auf dem Gehäuse (1) angeordneten, der Beschickungsöffnung (7) zugeordneten Einräumvorrichtung (8) mit drehangetriebenen Einräumwerkzeugen (10, 11), welche das Einziehen der plastischen Masse durch die Schnecke(n) (2) unterstützen, wobei die Einräumwerkzeuge (10, 11) eine Drehachse (12, 13) haben, welche oberhalb der Längsachse (14) der Schnecke(n) (2) verläuft.

Erfindungsgemäß ist vorgesehen, daß die Drehachse (12, 13) der Einräumwerkzeuge (10, 11) quer zur Längsachse (14) der Schnecke(n) (2) verläuft.

## Beschreibung

Die Erfindung geht von einer Strangpresse mit den im Oberbegriff des Anspruchs 1 angegebenen Merkmalen aus. Eine derartige Strangpresse ist aus Lueger's Lexikon der Technik, Band 5 (1963), Seite 633 bekannt. Es handelt sich dabei um eine Strangpresse zum Verdichten plastischer Schamottemassen, bei welcher in einem Gehäuse, welches auch als Preßzylinder bezeichnet wird, eine Schnecke gelagert ist, deren Welle nach hinten aus dem Preßzylinder herausgeführt und durch einen Antriebsmotor über ein Getriebe antreibbar ist. Im hinteren Bereich des Preßzylinders befindet sich ein Aufgabetrichter, in welchem ein Knetflügel oder eine Speisewalze drehbar gelagert ist, welche synchron mit der Schnecke angetrieben sind. Zu diesem Zweck sind der Knetflügel bzw. die Speisewalze mit ihrer Drehachse parallel zur Längsachse der Schnecke über dieser in dem Aufgabetrichter gelagert und werden vom Antriebsmotor der Schnecke über ein sich verzweigendes Getriebe angetrieben. Der Knetflügel bzw. die Speisewalze unterstützen das Einziehen der in den Aufgabetrichter gegebenen plastischen Masse durch die Schnecke. Die plastische Masse wird durch eine Beschickungsöffnung eingezogen, welche an der Oberseite des Preßzylinders angeordnet ist.

Aus Lueger's Lexikon der Technik, Band 11 (1966), Seite 490 ist ferner eine gattungsgemäße Vakuum-Strangpresse zur Verwendung in der Ziegelindustrie offenbart, bei welcher die plastische keramische Masse dem Preßzylinder durch einen Vorpreßzylinder zugeführt wird. Der Vorpreßzylinder ist parallel zum Preßzylinder oberhalb des Preßzylinders angeordnet. Die vom Vorpreßzylinder ausgepreßte plastische Masse wird von einem Schnitzelmesser in kleine Späne zerschnitten, welche über Einzugshaspeln in die darunterliegende Strangpresse fallen. Die Einzugshaspeln sind eine Einräumvorrichtung, welche vom Antriebsmotor der Strangpresse über ein sich verzweigendes Getriebe angetrieben wird.

Damit die Strangpresse einen gleichmäßig bemessenen und gleichmäßig dichten Strang liefert, ist es wichtig, daß sie in hinreichender Menge und gleichmäßig mit der plastischen Masse beschickt wird. Das ist bei den bekannten Strangpressen mit den dafür vorgesehenen Einräumwerkzeugen insbesondere bei Massen, die sich schwer einziehen lassen, nicht gewährleistet.

Der vorliegenden Erfindung liegt die **Aufgabe** zugrunde, dem durch eine Strangpresse mit einer wirksameren Einräumvorrichtung abzuhelfen.

Diese Aufgabe wird gelöst durch eine Strangpresse mit den im Anspruch 1 angegebenen Merkmalen. Vorteilhafte Weiterbildungen der Erfindung sind Gegenstand der Unteransprüche.

Die Erfindung vollzieht vom bisher bekannten Stand der Technik eine Abkehr, indem sie vorsieht, daß die Einräumwerkzeuge eine Drehachse haben, welche nicht mehr parallel zur Längsachse der Schnecke(n), sondern quer zur Längsachse der Schnecke(n) der Strangpresse verläuft. Das hat wesentliche Vorteile:
◆ Die plastische Masse kann anders als bei den bekannten Einräumvorrichtungen mit besserem Wirkungsgrad über den gesamten Durchmesser der Schnecke(n) in das Gehäuse eingeräumt werden, in welchem sich die Schnecke(n) dreht bzw. drehen. Das gilt sogar auch dann, wenn bei einer Strangpresse mit zwei nebeneinander in einem Gehäuse angeordneten Schnecken (ein sogenannter Doppelwellenextruder) oder bei einer Strangpresse, in welcher drei Schnecken nebeneinander in dem entsprechend angepaßten Gehäuse der Strangpresse gelagert sind (Dreiwellenextruder) und die zwei oder drei Schnecken lediglich von einer gemeinsamen Einräumvorrichtung versorgt werden. Die Gefahr, daß sich im Gehäuse Toträume bilden, welche beim Beschicken mit der plastischen Masse von dieser nicht oder nur schwierig erreicht werden, ist bei erfindungsgemäßer Ausbildung der Strangpresse stark vermindert und kann bei günstiger Ausbildung der Einräumwerkzeuge sogar ganz ausgeschlossen werden. Es ist sogar möglich, die plastischen Massen annähernd gleichmäßig über den Durchmesser der Schnecke(n) verteilt oder dem quer zur Längsachse der Schnecke(n) bestehenden Verlauf des lichten Querschnittes des Gehäuses angepaßt in das Gehäuse zu bringen, in welchem sich die Schnecken drehen.
◆ Es ist sogar möglich, die Strangpresse mit einer erfindungsgemäßen Einräumvorrichtung zu stopfen, was bei bekannten Strangpressen besondere Stopfeinrichtungen erforderte, z.B. eine Stopfschnecke, welche die Strangpresse beschickt.
◆ Infolge der Anordnung der Drehachse der Einräumwerkzeuge quer zur Längsachse der Schnecke(n) können die Einräumwerkzeuge die plastische Masse der Schnecke bzw. den Schnecken mit einer Bewegungskomponente in Preßrichtung der Schnecken zuführen. Zu diesem Zweck ist vorgesehen, daß von zwei in Längsrichtung der Schnecke(n) hintereinander angeordneten drehangetriebenen Einräumwerkzeugen das dem Mundstück der Presse nächstliegende, vordere Einräumwerkzeug mit solchem Drehsinn angetrieben ist, daß es mit seiner der Schnecke zugewandten Oberfläche in die Preßrichtung der Schnecke(n) dreht. Das andere, hintere Einräumwerkzeug kann gleichsinnig oder gegensinnig mit dem vorderen Einräumwerkzeug angetrieben sein; vorzugsweise ist es gegensinnig angetrieben, weil damit eine höherer Wirkungsgrad beim Einräumen der plastischen Masse erreicht wird.

Vorzugsweise sind die Schnecken einerseits und die Einräumwerkzeuge andererseits durch getrennte Antriebsmotoren angetrieben. Das macht es möglich, die Einräumwerkzeuge unabhängig von der Drehgeschwindigkeit der Schnecken anzutreiben und auf diese Weise das Beschicken der Strangpresse mit der plastischen Masse für jeden Anwendungsfall individuell zu optimieren. Daran besteht ein Bedarf, weil sich die plastischen Massen je nach ihrer Zusammensetzung, ihrem Wassergehalt, ihrer Herkunft und ihrer Vorbehandlung unterschiedlich verhalten. Bei gesonderten Antriebsmotoren für die Einräumwerkzeuge läßt sich das Einbringen der plastischen Masse in die Strangpresse nunmehr ergebnisorientiert optimieren, das heißt, nach dem Ergebnis der Überprüfung der Qualität des von der Strangpresse gelieferten Stranges kann die Wirksamkeit der Einräumwerkzeuge optimiert werden. Damit kann zugleich die Leistungsfähigkeit der Strangpresse (der Durchsatz der plastischen Masse) optimiert werden.

Bei Strangpressen, bei welchen die Einräumwerkzeuge eine zur Längsachse der Schnecke parallele Drehachse haben, wäre das nicht oder nur unter großen Schwierigkeiten möglich, weil bei ihnen der Platz für die gesonderten Antriebsmotoren für die Einräumwerkzeuge nicht vorhanden ist, denn der wird bereits von dem raumgreifenden Getriebe der Schnecke(n) beansprucht. Bei erfindungsgemäßer Anordnung der Einräumwerkzeuge fällt diese schwerwiegende Beschränkung weg.

Vorzugsweise ist für die Einräumwerkzeuge ein stufenlos regelbarer Antriebsmotor vorgesehen, um den Wirkungsgrad der Einräumwerkzeuge stufenlos an den jeweils gegebenen Anwendungsfall der Strangpresse anpassen zu können.

Zweckmäßigerweise sind die Einräumwerkzeuge paarweise vorgesehen. Sie können durch einen gemeinsamen Antriebsmotor synchron angetrieben werden, wobei die Synchronisierung durch zwei miteinander kämmende Zahnräder geschehen kann. Die Einräumwerkzeuge können jedoch auch einzeln durch gesonderte Antriebsmotoren angetrieben sein. Das ermöglicht eine weitestgehende Optimierung der Wirksamkeit der Einräumwerkzeuge.

Eine Bedienungsperson der Strangpresse kann die Drehzahl der Einräumwerkzeuge und das Drehzahlverhältnis der Einräumwerkzeuge z.B. nach Inaugenscheinnahme einstellen, das heißt, sie beobachtet in einem Probelauf wie die plastische Masse eingezogen wird und wie sich dieses bei Änderung der Drehzahl und des Drehzahlverhältnisses der Einräumwerkzeuge ändert und kann es so durch einfache Beobachtung optimieren.

Grundsätzlich können Einräumwerkzeuge verwendet werden, welche aus dem Stand der Technik bekannt sind, insbesondere Walzen oder Haspeln. Besonders bevorzugt ist die Verwendung von Walzen als Einräumwerkzeugen. Die Einräumwerkzeuge können oberhalb der Schnecke(n) mit Abstand von diesen angeordnet sein, vorzugsweise findet jedoch ein gegenseitiger Eingriff zwischen Schnecke(n) und Einräumwerkzeugen statt, um deren Wirksamkeit zu steigern. Dieser gegenseitiger Eingriff ist besonders elegant mit Hilfe von Walzen zu verwirklichen, welche zu diesem Zweck eine Kontur erhalten, welche der Schnecke bzw. den Schnecken den Eingriff in die sich drehenden Walzen ermöglicht. Um eine hohe Wirksamkeit zu erreichen, sollte die Kontur der Walzenoberfläche den eingreifenden Schneckenflügeln möglichst eng angepaßt sein. Das gelingt am besten, wenn die Mantelfläche der Walzen im Eingriffsbereich eine Hyperboloidfläche ist.

Die als Einräumwerkzeuge verwendeten Walzen können grundsätzlich eine glatte Oberfläche haben, denn weil die plastischen Massen eine Neigung haben, an der Oberfläche der Einräumwerkzeuge und der Schnecken zu haften, werden sie auch von glatten Oberflächen mitgenommen. Vorzugsweise ist die Oberfläche der Walzen jedoch aufgerauht, insbesondere geriffelt, wobei sich die Riffelung am besten im wesentlichen in Richtung der Drehachse der Walzen erstreckt.

Damit ist die Mitnahmewirkung, welche die Walzen auf die plastische Masse auswirken, besonders gut.

Einräumwerkzeuge, die geeignet sind, die plastische Masse in den Einwirkungsbereich einer Schnecke hineinzuräumen, können einen Teil der plastischen Masse unter Umständen wieder zurückwandern lassen. Um das zu verhindern, werden die Einräumwerkzeuge in der Einräumvorrichtung vorzugsweise so angeordnet, daß gehäusefeste Leitbleche in den Wirkungsbereich der Einräumwerkzeuge eingreifen, um den Querschnitt, über welchen die plastische Masse unter Umständen zurückfließen könnte, möglichst klein zu halten und dadurch ein Zurückfließen der plastischen Masse weitgehend zu verhindern.

Die Erfindung eignet sich besonders für Strangpressen, welche plastische Massen für die keramische Industrie verarbeiten, insbesondere für die Ziegeleiindustrie. Die Erfindung kann aber auch angewendet werden in anderen Anwendungsfällen, in welchen plastische Massen durch eine Strangpresse einzuziehen sind, z.B. in der Lebensmittelindustrie.

Ein Ausführungsbeispiel der Erfindung ist schematisch in den beigefügten Zeichnungen dargestellt.
- Figur 1: zeigt eine erfindungsgemäße Strangpresse in einem Längsschnitt,

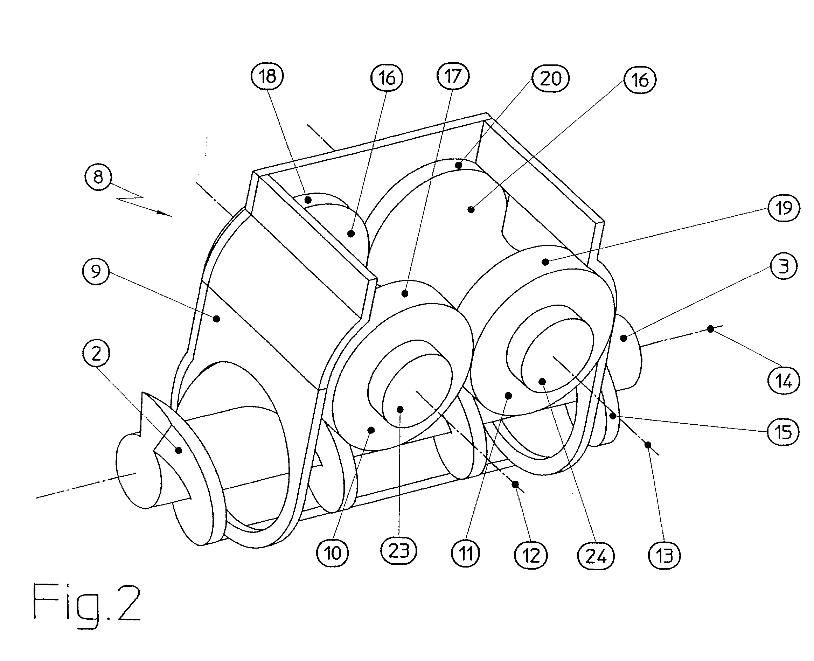

- Figur 2: zeigt als Detail die Einräumvorrichtung dieser Strangpresse in einer Schrägansicht, wobei das Gehäuse der Einräumvorrichtung teilweise weggebrochen ist,

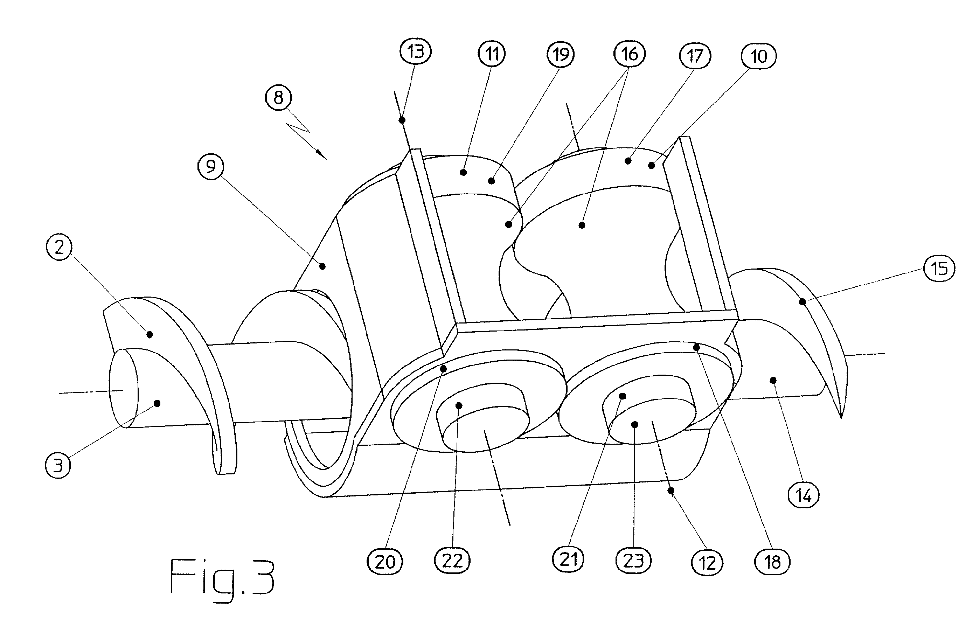

- Figur 3: zeigt eine Schrägansicht der Einräumvorrichtung aus einem anderen Blickwinkel, und

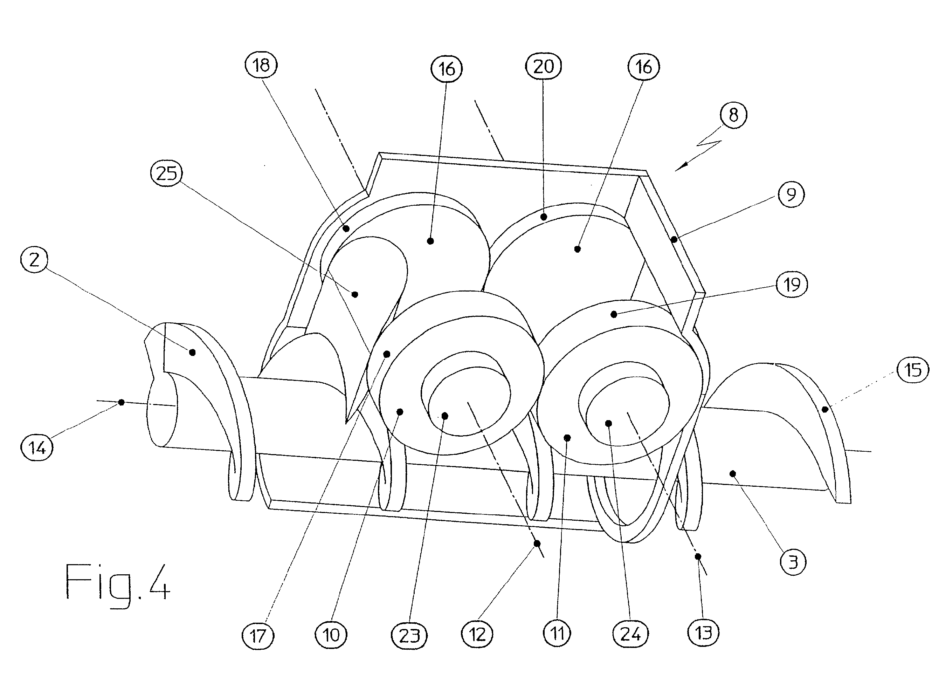

- Figur 4: zeigt die Einräumvorrichtung in einer Schrägansicht mit Blickrichtung wie in Figur 2, aber mit stärker weggebrochenem Gehäuse.

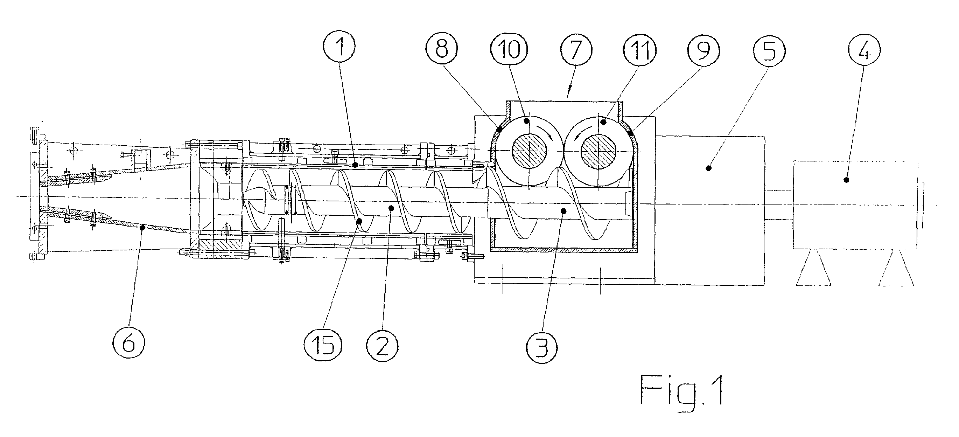

Figur 1 zeigt den Grundaufbau einer Strangpresse mit einer in einem Gehäuse 1 gelagerten Schnecke 2, deren Welle 3 nach hinten aus dem Gehäuse 1 herausgeführt ist und von dort aus durch einen Elektromotor 4 über ein Getriebe 5 antreibbar ist. Am vorderen Ende des Gehäuses 1 ist ein Mundstück 6 vorgesehen, welches den zu pressenden Strang formt und austreten läßt. Das Gehäuse 1 wird auch als Zylinder bezeichnet, und zwar selbst dann, wenn es nicht zylindrisch, sondern konisch oder abgestuft ausgebildet ist oder wenn es mehrere Schnecken nebeneinander angeordnet enthält. Das Gehäuse 1 umschließt die Schnecke 2 eng.

Die zu verarbeitende plastische Masse wird der Schnecke 2 im hinteren Bereich des Gehäuses 1 zugeführt. Dort ist das Gehäuse 1 mit einer Beschickungsöffnung 7 versehen, welcher eine Einräumvorrichtung 9 zugeordnet ist, welche ein eigenes Gehäuse 9 hat, in welchem als Einräumwerkzeuge zwei Walzen 10 und 11 drehbar gelagert sind. Die Drehachsen 12 und 13 der beiden Walzen 10 und 11 verlaufen parallel zueinander oberhalb der Schnecke 2, und zwar in einem rechten Winkel zu deren Längsachse 14. Die Flügel 15 der Schnecke 2 greifen in die Walzen 10 und 11 ein, welche deshalb in dem Eingriffsbereich keine zylindrische Mantelfläche haben, sondern eine Mantelfläche in Gestalt einer Hyperboloidschale 16, deren Kontur dem gewollten Eingriff der Flügel 15 der Schnecke 2 eng angepaßt ist. An die Hyperboloidschalen 16 schließen sich kurze zylindrische Abschnitte 17, 18, 19 und 20 der Walzen 10 und 11 an. Mit daraus vorstehenden Walzenzapfen 21, 22, 23 und 24 sind die Walzen 10 und 11 in dem Gehäuse 9 der Einräumvorrichtung 8 drehbar gelagert, welches die Walzen 10 und 11 auf ihren einander abgewandten Seiten eng umgibt und auf der dem Mundstück 6 nächstliegenden Wand des Gehäuses 9 an dessen Innenseite mit einem gehäusefesten Leitblech 25 in die durch die Hyperboloidform gebildete Taille der vorderen Walze 10 eingreift, um ein Zurückfließen der von der Schnecke 2 vorgetriebenen plastischen Masse weitgehend zu verhindern.

Die beiden Walzen 10 und 11 sind durch einen gemeinsamen Elektromotor 26 antreibbar, welcher vorzugsweise ein in seiner Drehzahl stufenlos regelbarer Motor ist. Um beide Walzen 10 und 11 synchron und gegensinnig anzutreiben, sind auf den beiden Walzenzapfen 21, 22 zwei Zahnräder 27 und 28 vorgesehen, welche miteinander kämmen. Alternativ wäre es möglich, unter Weglassen der Zahnräder die beiden Walzen 10 und 11 durch gesonderte Elektromotoren anzutreiben.

Der Antrieb erfolgt vorzugsweise so, daß die vordere Walze 10, welche dem Mundstück 6 am nächsten liegt, einen solchen Drehsinn hat, daß sich ihr jeweils der Schnecke gegenüberliegen Abschnitt der Mantelfläche in der Preßrichtung der Schnecke 2 dreht, also in Richtung zum Mundstück 6 hin. Die hintere Walze 11 ist vorzugsweise gegensinnig zur vorderen Walze 10 angetrieben.

Dargestellt ist die Erfindung am Beispiel einer Strangpresse mit nur einer Schnecke 2. Sie kann in entsprechender Weise aber auch für eine Strangpresse mit zwei oder mehr als zwei Schnecken, die parallel nebeneinander in einem Gehäuse angeordnet sind, verwirklicht werden. Bei einer Strangpresse mit zwei Schnecken (auch als Doppelwellenextruder bezeichnet) wären die Walzen 10, 11 entsprechend so zu verlängern, daß sie sich über beide Schnecken erstrecken, wobei jede der beiden Walzen den Schnecken angepaßt eine Oberfläche mit zwei hintereinander angeordneten Hyperboloidschalen hätte.

## Patentansprüche

1. Strangpresse für plastische Massen, insbesondere für keramische Massen,
- mit einem Gehäuse (1)
- mit einer drehbar in dem Gehäuse (1) gelagerten Schnecke (2) oder mit mehreren parallel nebeneinander drehbar in dem Gehäuse gelagerten Schnecken,
- mit einer an der Oberseite des Gehäuses (1) angeordneten Beschickungsöffnung (7), durch welche hindurch die sich drehende(n) Schnecke(n) (2) die plastische Masse in das Gehäuse (1) einzieht bzw. einziehen,
- und mit einer auf dem Gehäuse (1) angeordneten, der Beschickungsöffnung (7) zugeordneten Einräumvorrichtung (8) mit drehangetriebenen Einräumwerkzeugen (10, 11), welche das Einziehen der plastischen Masse durch die Schnecke(n) (2) unterstützen, wobei die Einräumwerkzeuge (10, 11) eine Drehachse (12, 13) haben, welche oberhalb der Längsachse (14) der Schnecke(n) (2) verläuft,
**dadurch gekennzeichnet, daß** die Drehachse (12, 13) der Einräumwerkzeuge (10, 11) quer zur Längsachse (14) der Schnecke(n) (2) verläuft.

2. Strangpresse nach Anspruch 1, **dadurch gekennzeichnet, daß** von zwei Einräumwerkzeugen (10, 11) jenes, welches einem Mundstück (6) der Strangpresse am nächsten liegt, mit einem solchen Drehsinn angetrieben ist, daß sich ihr der Schnecke (2) zugewandter Abschnitt ihrer Oberfläche in die Preßrichtung der Schnecke (2) dreht.

3. Strangpresse nach Anspruch 2, **dadurch gekennzeichnet, daß** zwei Einräumwerkzeuge (10, 11) vorgesehen sind, welche gegensinnig angetrieben sind.

4. Strangpresse nach einem der vorstehenden Ansprüche, **dadurch gekennzeichnet, daß** die Schnecke(n) (2) einerseits und die Einräumwerkzeuge (10, 11) andererseits durch getrennte Antriebsmotoren (4, 26) angetrieben sind.

5. Strangpresse nach Anspruch 4, **dadurch gekennzeichnet, daß** für die Einräumwerkzeuge (10, 11) ein stufenlos regelbarer Antriebsmotor (26) vorgesehen ist.

6. Strangpresse nach Anspruch 5, **dadurch gekennzeichnet, daß** die beiden Einräumwerkzeuge (10, 11) durch einen gemeinsamen Antriebsmotor (26) synchron angetrieben sind.

7. Strangpresse nach Anspruch 5, **dadurch gekennzeichnet, daß** die Einräumwerkzeuge (10, 11) einzeln durch gesonderte Antriebsmotoren angetrieben sind.

8. Strangpresse nach einem der vorhergehenden Ansprüche, **dadurch gekennzeichnet, daß** die Schnecke(n) (2) in die Einräumwerkzeuge (10, 11) eingreift bzw. eingreifen.

9. Strangpresse nach einem der vorstehenden Ansprüche, **dadurch gekennzeichnet, daß** die Einräumwerkzeuge (10, 11) Walzen sind.

10. Strangpresse nach Anspruch 8 und 9, **dadurch gekennzeichnet, daß** der Eingriffsbereich der Walzen (10, 11) eine Hyperboloidschale ist.

11. Strangpresse nach Anspruch 9 oder 10, **dadurch gekennzeichnet, daß** die Walzen (10, 11) eine aufgerauhte, insbesondere eine geriffelte Oberfläche haben.

12. Strangpresse nach einem der vorstehenden Ansprüche, **dadurch gekennzeichnet, daß** ein oder mehrere gehäusefeste Leitbleche (25) vorgesehen sind, welche in den Wirkungsbereich der Einräumwerkzeuge (10, 11) eingreifen, um einem Zurückfließen der plastischen Masse entgegenzuwirken.
